Europäisches Patentamt

(19) European Patent Office

Office européen des brevets

(11) Numéro de publication: **0 053 058**

**A1**

(12) **DEMANDE DE BREVET EUROPEEN**

(21) Numéro de dépôt: **81401732.3**

(22) Date de dépôt: **29.10.81**

(51) Int. Cl.³: **B 62 B 3/04**

(30) Priorité: **14.11.80 FR 8024185**

(43) Date de publication de la demande:
**02.06.82 Bulletin 82/22**

(84) Etats contractants désignés:
**AT BE CH DE GB IT LI LU NL SE**

(71) Demandeur: **Milan, Jean Claude**
**20 rue Jean Giraudoux**
**F-92330 Sceaux(FR)**

(72) Inventeur: **Milan, Jean Claude**
**20 rue Jean Giraudoux**
**F-92330 Sceaux(FR)**

(54) **Chariot à vidage automatique.**

(57) L'invention concerne un chariot permettant le transport de fardeaux avec vidage automatique.

Il comprend un caisson fixé sur une ossature métallique. Une de ses parois est aménagée en porte. Un dispositif permet l'ouverture automatique de cette porte pour vider les matériaux contenus dans le chariot.

L'emploi le plus intéressant de ce chariot est de le substituer à la brouette, en particulier pour l'évacuation des gravois de l'intérieur d'une construction.

EP 0 053 058 A1

L'invention a pour objet la fabrication d'un chariot à vidage automatique destiné principalement au transport des gravois depuis l'intérieur d'un bâtiment jusqu'à la benne permettant de les évacuer aux décharges publiques.Ce chariot est utile par le fait qu'il apporte une économie importante sur les coûts de main d'oeuvre.

Pour nettoyer un bâtiment en cours de construction, l'ouvrier balaye les gravois et les rassemble en tas.Il les charge dans une brouette, les transporte dans l'étage et les vide sur une passerelle de sortie en façade.Sur cette passerelle, ils sont chargés à la pelle dans une benne dite de terrassier (capacité 500 litres).Lorsque cette benne est pleine, on la descend de l'étage avec l'aide de la grue, pour aller la vider dans une benne de 9 M3 de capacité.Il est indispensable qu'un ouvrier soit présent pour vider la benne de terrassier dans la benne de stockage.La benne de terrassier est de forme tronconnique et les attaches du bras permettant son levage à la grue sont situées au dessus de centre de gravité, ce qui rend le vidage difficile, d'où perte de temps, pour le manoeuvre chargé de ce travail, pour la grue, pour la personne qui attend dans l'étage.Il est à noter également que cette benne de terrassier n'est manutentionnable qu'avec l'aide d'une grue.Si par exemple un balayeur a terminé de nettoyer son étage, il devra attendre que la grue soit disponible pour pouvoir déplacer sa benne.L'emploi de la brouette et de la benne de terrassier ont pour conséquence des pertes importantes d'heures de main d'oeuvre.

Ces pertes sont conqéquentes non pas à une mauvaise organisation du travail, mais au fait qu'il n'existe pas de matériel adapté à ces opérations.

L'invention a pour objet de mettre à la disposition des entreprises un outil robuste, adapté au travail à exécuter, permettant de meilleures conditions de travail, avec une rentabilité accrue.Pour mieux faire comprendre l'invention, nous avons choisi le chariot nécessaire au nettoyage des bâtiments en cours de travaux, chariots permettant d'éviter les inconvénients énumérés ci-avant.

Un chariot conforme à la présente invention est constitué par un plateau ou chassis construit avec des U métalliques lui permettant de recevoir une forte charge.Ce plateau est équipé en sous face de quatre roues pivotantes.Sur le dessus, sur trois côtés, de montants solidaires du plateau permettant la pose de parois.Sur le quatrième côté, le chariot de l'invention est équipé d'une porte basculante.Sur le plateau sont fixés quatre anneaux de levage permettant ainsi le transport du chariot par une grue.

- 2 -

**0053058**

Pour vider le chariot dans la benne de stockage, il est prévu un dispositif d'ouverture de la porte.Cette serrure s'ouvre par contact avec un fer rigide et stable placé au-dessus ou à côté de la benne.C'est le grutier qui commande cette opération.

Pour mettre en valeur la présente invention et en dégager les intérêts, nous décrivons ci-après, le circuit de nettoyage d'un bâtiment mais avec le chariot de la présente invention.L'ouvrier balaye les gravois et les rassemble en tas.Il les charge dans le chariot (capacité 500 litres environ). Il appelle la grue et accroche le chariot.Le grutier descend le chariot directement sur la benne de stockage et par contact, la porte s'ouvre automatiquement.Les gravois se vident dans la benne.

Pour bien faire comprendre l'invention, on donnera à titre d'exemple, une description du chariot conforme à l'invention au cours de laquelle d'autres caractéristiques apparaîtront.Les dimensions sont données à titre indicatif.On se reportera aux dessins annexés dans lesquels :

La figure 1 est une vue de dessous d'un chariot

La figure 2 est une vue de côté d'un chariot

La figure 3 est une coupe

La figure 4 est une vue de dessus d'un chassis

La figure 5 est une coupe transversale

La figure 6 est une vue de l'avant

La figure 7 est une vue d'un fer de levage

La figure 8 est une vue de dessus d'un chariot

La figure 9 est une vue transversale en coupe

La figure 10 est une coupe transversale

La figure 11 est une coupe de détail

La figure 12 est une coupe longitudinale

La figure 13 est une coupe de détail

La figure 14 est une coupe

La figure 15 est une coupe

La figure 16 est une coupe de détail

La figure 17 est une vue en élévation sur une porte

La figure 18 est une coupe de détail

La figure 19 est une coupe de détail

La figure 20 est une coupe de détail

La figure 21 est une coupe de détail

La figure 22 est une coupe longitudinale

La figure 23 est une coupe de détail

La figure 24 est une coupe de détail

La figure 25 est une vue de côté

La figure 26 est une vue de face.

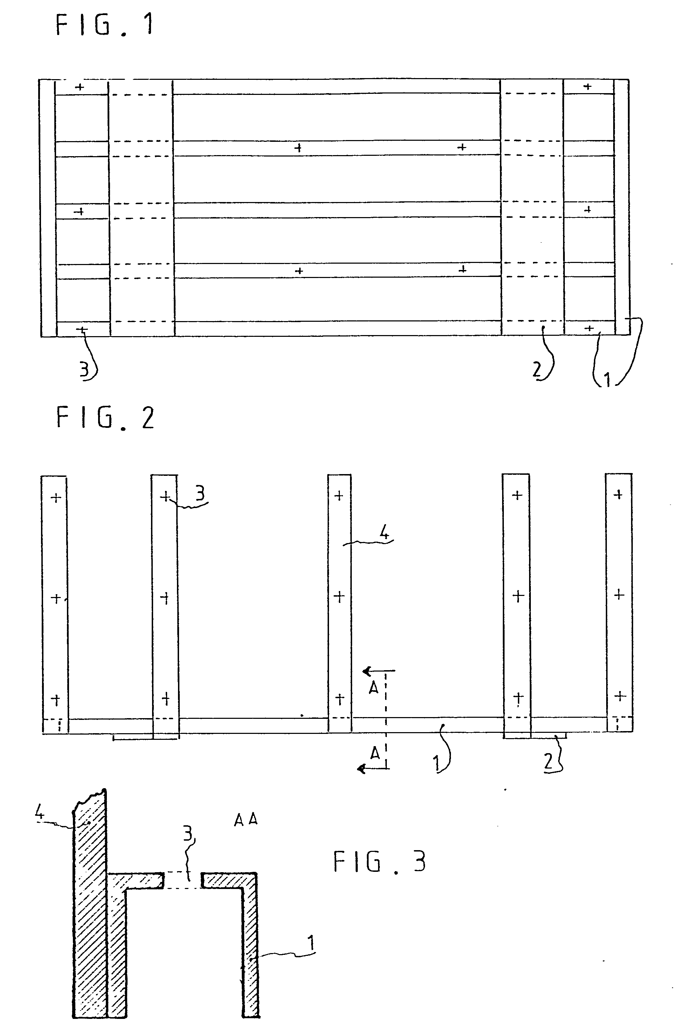

En se rapportant d'abord à la figure 1 :

La figure 1 est une vue de dessous du chassis constituant la base du chariot.Ce chassis est formé par des fers U 1 de 35 X 35 X 3 mm assemblés entre eux par soudure.Ces fers sont percés d'un trou 3 de 8 mm de diamètre permettant ultérieurement de fixer l'habillage.Sur cette ossature sont soudés des fers plats 2 de 150 X 8 mm servant de support aux roues pivotantes. Les dimensions hors tout de ce plateau sont d'une longueur de 1400 mm pour une longueur de 600 mm.Cette faible largeur permet au chariot de passer dans une porte.

La figure 2 est une vue de côté du chassis sur lequel sont soudés des montants verticaux.Ces montants sont également percés de trous 3 permettant d'y fixer un habillage.

La figure 3 est une coupe AA au droit d'un montant vertical 4 et d'un fer U 1 composant le plateau.

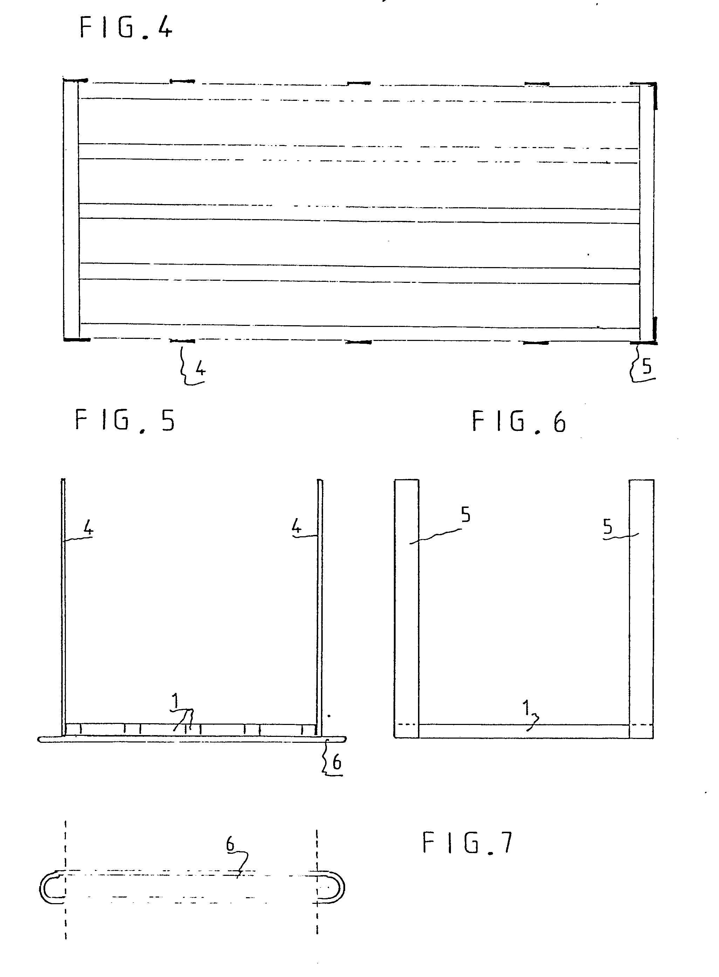

La figure 4 est une vue de dessus d'un chassis.Elle montre la position des montants verticaux 4, fer plat de 60 mm X 8 mm et du montant d'angle 5 constitué par une cornière 60 X 60 X 8 mm.

La figure 5 est une coupe en travers du chassis.On y distingue les fers U 1, les montants verticaux 4 et sous les fers U, un fer 6 formant les anneaux de levage.

La figure 6 est une vue de l'avant du chassis, on remarquera les fers 1 du chassis et un côté des fers cornières 5.La position et le nombre des montants verticaux peut varier suivant les nécessités.

La figure 7 est une vue de dessus du fer 6, fer rond de 15 mm de diamètre et de 680 mm de longueur.Ce fer 6 est soudé sur les fers U du chassis. Il déborde de chaque côté du plateau de 40 mm.

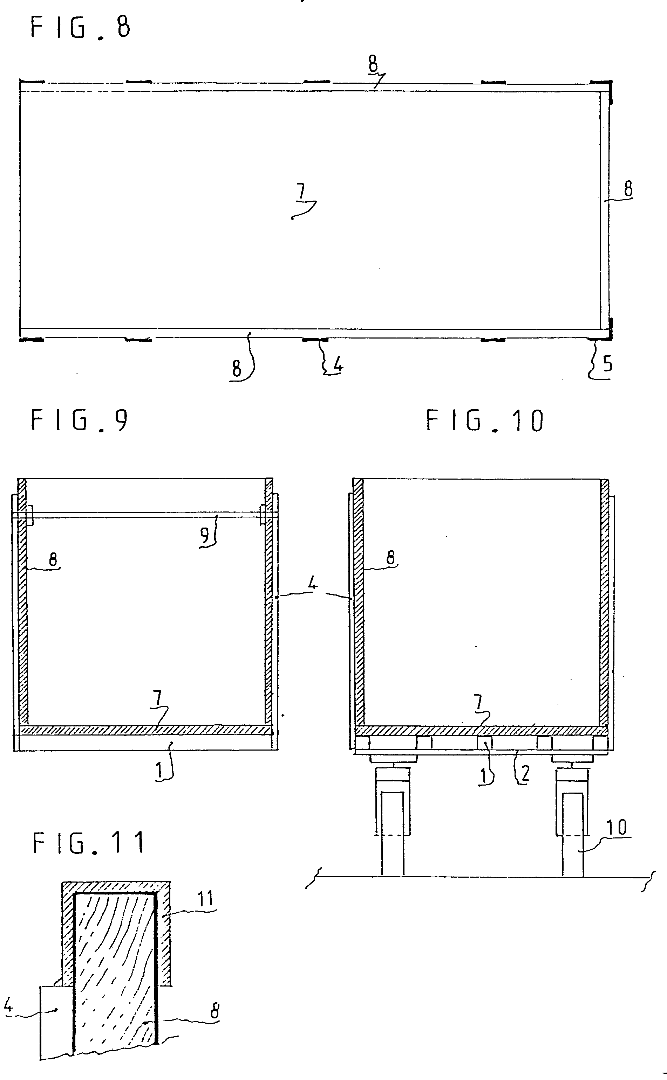

La figure 8 est une vue de dessus du chariot.On remarquera les montants verticaux 4 et 5.On a habillé le chassis par un contreplaqué 7 de 20 mm d'épaisseur sur les 3 côtés seulement.

La figure 9 est une coupe sur le chariot ainsi formé.On y voit clairement le fond 7 et les parois 8.Pour assurer le maintient des parois verticales on peut placer par exemple un fer rond 9 de 15 mm de diamètre soudé sur les supports verticaux 4 avec une platine sur le contreplaqué.

La figure 10 est une coupe sur le chariot.On y voit le fer 2 support de roues et les roues pivotantes 10.Ces roues de 200 mm de diamètre peuvent être équipées d'un dispositif de blocage pour assurer la sécurité du chariot. Il y a quatre roues par chariot, toutes disposées comme indiqué sur les fi-

gures 10 et 12.

La figure 11 est une coupe au sommet de la paroi 8.On remarque le montant vertical 4.Le sommet de la paroi 8 est protégé par un fer U de 25 X 25 X 2,5 mm.

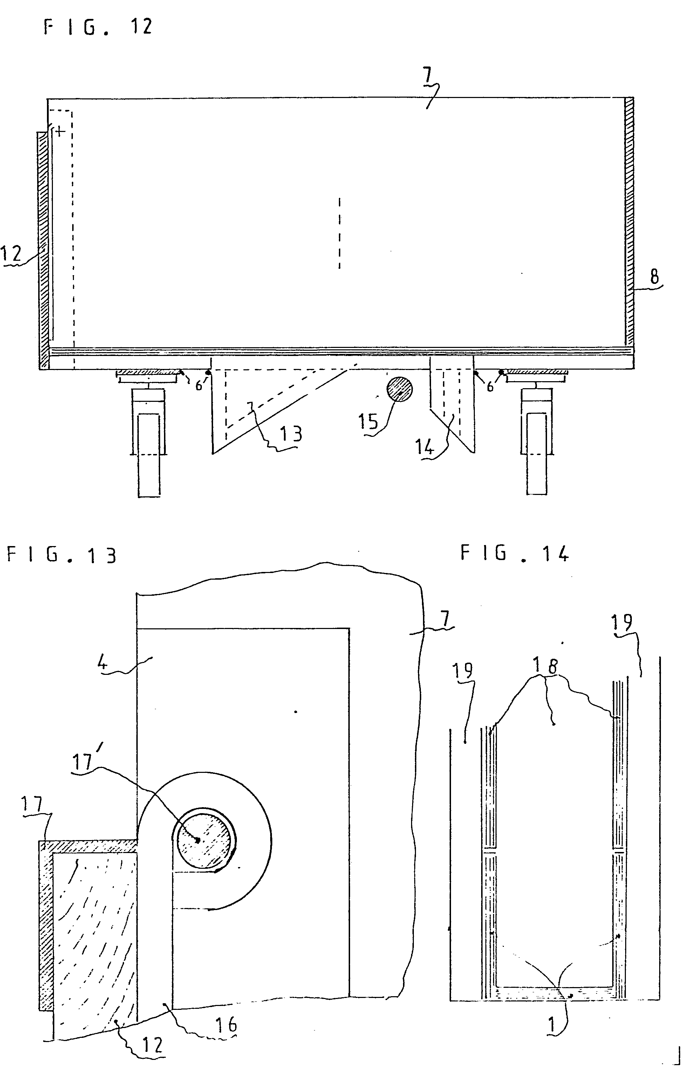

La figure 12 est une coupe longitudinale sur un chariot.A l'arrière du caisson on a mis en place la porte 12, pivotante autour d'un axe situé en partie haute.Remarquons en sous face du plateau la position des anneaux de levage.Un chariot comporte quatre anneaux de levage 6, soit 2 de chaque côté.En sous face du chariot, éventuellement, sont disposées les pièces 13 et 14.Elles servent de guide lorsque l'on veut vider la benne en prenant appui sur le fer 15.Les pièces 14 et 13sont fixées sur le fer 1 au centre du plateau.

La figure 13 est une coupe sur le sommet de la porte 12.Sur tout son périmètre, la porte est habillée à l'extérieur par un fer cornière 17, dimensions 40 X 20 X 3mm.La porte est formée d'un contreplaqué de 20 mm d'épaisseur.Côté intérieur un fer 16, fer plat de 20 mm X 8 mm bouclé à son sommet sert de gond à la porte.Celle-ci pivote autour d'un axe 17' fixé sur les montants verticaux 4, de part et d'autre de la porte.

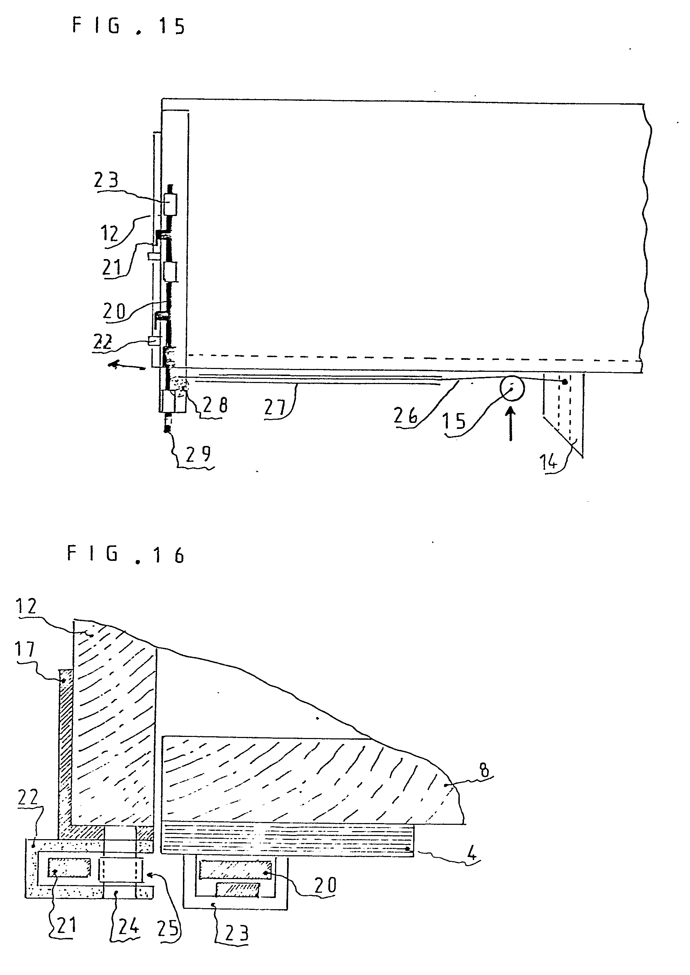

La figure 14 est une coupe sur les pièces 13 ou 14 montrant leur composition.Un fer 4 de 18, de 35 X 35 X 3 est soudé sur les fers U 1 du chassis.De chaque côté on soude en renfort un fer plat 19.

La figure 15 est une vue de côté, côté d'un chariot montrant un dispositif de commande et d'ouverture de la porte 12.Le câble 26 est fixé à une extrémité sur le support 14 et il est protégé par une gaine 27 et ensuite le cable passe sur la poulie 28.Il est fixé à son autre extrémité, au centre de la barre 29.La barre 29 a une longueur légérement supérieure à la largeur du chariot.Elle est fixée à chacune de ses extrémités sur un fer 20.Ce fer, rappelons le, un de chaque côté du chariot, est une tige supportant des tétières 21.Lorsqu'on exerce une pression sur le cable, la tige monte et dégage les tétières de la gâche 22, décondannant ainsi la porte, conformément au dessin.Le fer 15 est disposé sur une benne de stockage de gravois.Lorsqu'on pose le chariot avec la grue sur ce fer, celui-ci appuie sur le câble et décondanne ainsi l'ouverture de la porte.Les tétières sont fixées sur la porte 12.Alors que les guides 23 sont fixés sur le côté du chariot.Le fer 20 coulisse dans les guides 23.

La figure 16 est une coupe horizontale au droit de la gâche 22.Le fer U 23 de 25 X 13 X 3 sert de guide à la tige 20.Afin de faciliter le dégagement de la tétière 21, on mettra en place un axe 24 sur lequel est monté un galet 25.

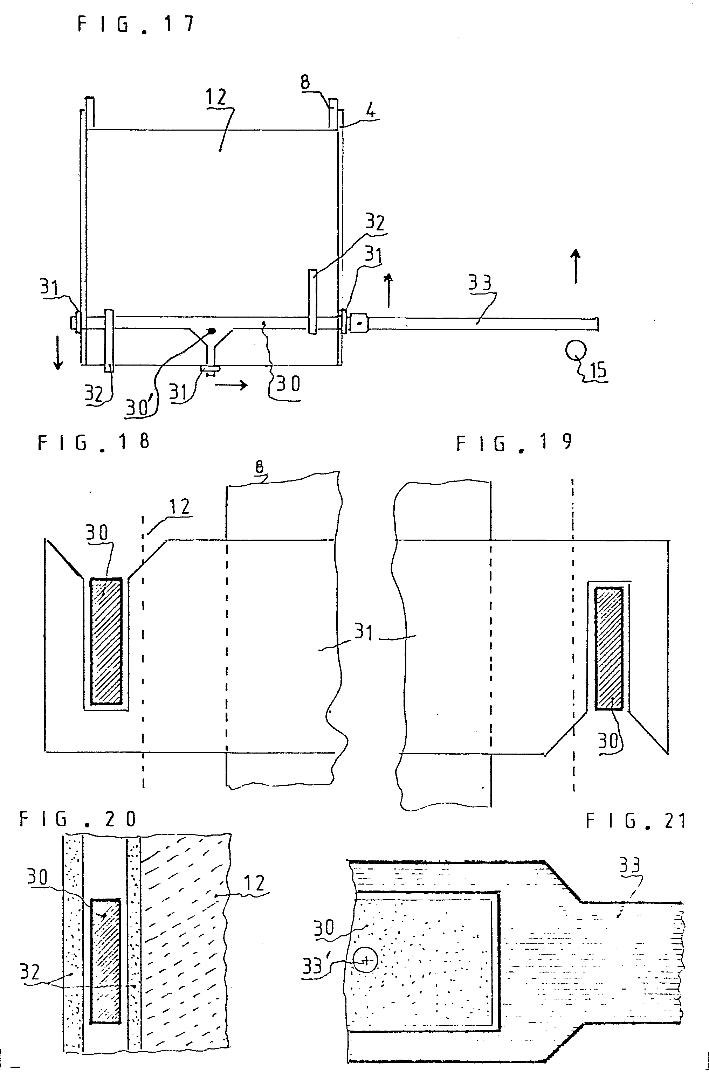

La figure 17 est une vue arrière du chariot côté porte.Elle montre un autre système de fermeture.Un fer 30 en pivotant autour d'un axe 30' situé au centre de la porte en partie basse, vient se loger en position de fermeture dans les 3 niches 31.Il condamne ainsi la porte.Pivotant dans l'autre sens, il ouvre la porte.Ce fer 30 coulisse dans les fers guide 32.A droite en regardant le dessin, le fer 30 peut recevoir un fer 33 lorsqu'on accroche la grue.Ce fer 33 en venant buter sur le fer 15, lorsque le chariot arrive sur la benne de stockage, ouvrira la porte.Les fers guides 32 et l'axe 30' sont fixés sur la porte.Les 3 niches 31 sont fixées sur le chariot.

La figure 18 est une coupe sur cette fermeture à gauche en regardant la porte, figure 17.

La figure 19 est une coupe sur la fermeture à droite en regardant la porte, figure 17.Evidemment le point de fermeture en bas est le même principe que celui dessiné sur les figures 18 et 19.

La figure 20 est une coupe sur les fers 32 servant de guide au bras 30.

La figure 21 est une coupe sur le dispositif d'assemblage du bras prolongateur 33 sur le bras 30.Une goupille 33' maintiendra les deux bras ensemble.

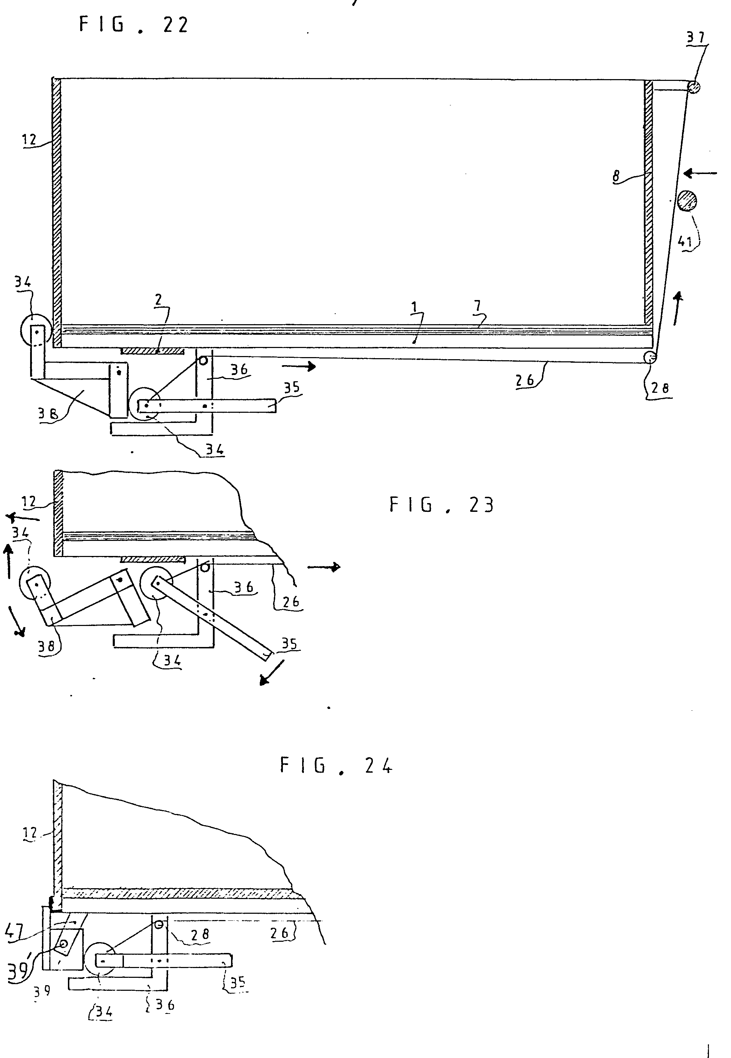

La figure 22 est une coupe longitudinale sur un chariot.Elle nous montre un autre dispositif de fermeture de porte et un autre système de commande du câble.L'avant du chariot est équipé d'une poignée 37.Au centre de cette poignée est fixé un câble 26.Ce câble est guidé sous le plateau par une poulie 28.Ce câble commandé parla barre 41 posée sur la benne de stockage commande l'ouverture de la porte 12.Sur cette figure est dessiné un autre principe d'ouverture de porte.Sous le chassis 1 est fixé un fer 36.Ce fer supporte un bras pivotant 35 ayant à son extrémité un galet 34.Galets composés d'un corps en acier et roulement à billes.Ce bras déssiné en position de fermeture de la porte, maintient un bras 38 équipé lui aussi à son extrémité d'un galet 34.Le bras 38 peut être équipé d'un ressort compensateur qui le maintiendra en position horizontale, en dehors des manoeuvres commandant l'ouverture de la porte.

La figure 23 représente le même mécanisme décrit sur la figure 22 mais en position d'ouverture de porte.

La figure 24 représente un autre mécanisme d'ouverture de porte.Le bras 36 fixé sur le chassis supporte un bras pivotant 35 au bout duquel est fixé un galet 34.Ce galet commande un crochet 39 permettant l'ouverture de la porte.Cette bielle pivote autour d'un axe 39' lui-même fixé sur un support 47 soudé sur le chassis.Le bras 36 par sa longueur limite le basculement du crochet 39.La partie inférieure du bras 35 est légérement inclinée afin que le galet ne puisse se dégager que par commande du câble.

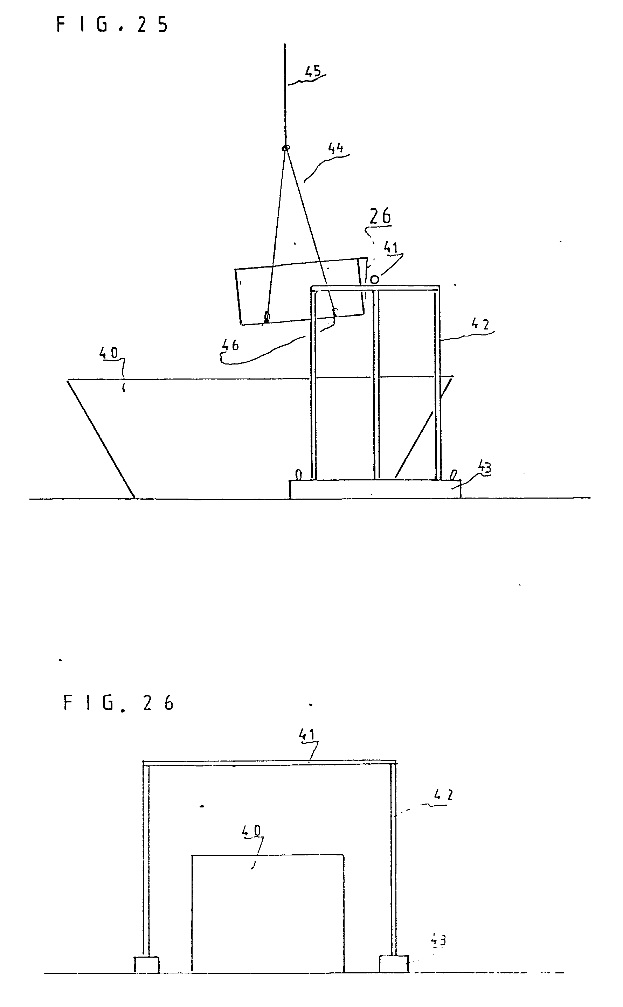

La figure 25 est une vue de côté d'une benne de stockage 40, entourée de deux côtés par une ossature 42 fixée sur des lests 43.Cette ossature ou chevalet supporte en partie haute la barre 41 ou 15.Lorsque le chariot arrive suspendu par une élingue quatre brins 44, au crochet de la grue 45, il suffit que le câble 26 vienne heurter la barre 41 pour ouvrir la porte. Les gravois contenus dans le chariot se vident dans la benne de stockage. Afin de faciliter cette opération, on interposera entre les anneaux de levage 6 et l'élingue 44 des boucles de câble de différentes longueurs.Pour fixer les idées, pas de boucle sur les anneaux situés à proximité de la porte, mais deux boucles sur les anneaux situés vers l'arrière du chariot.Une boucle de 150 mm de hauteur en charge donnera évidemment une inclinaison au fond du chariot de 150 mm.

La figure 26 est une vue du côté arrière d'une benne de stockage 40 avec le chevalet 42 supportant la barre 41 ou 15.On pourra également envisager la construction d'un chevalet reposant directement sur la benne.

Ce chariot utile pour l'enlèvement des gravois le sera également pour assurer le transport d'autres matériaux à l'intérieur d'une construction, tels que béton, mortier, sacs de ciment, ou plâtre, agglomérés, briques.Par sa faible largeur lui permettant de circuler partout, il sera utile pour approvisionner à pied d'oeuvre les matériaux.Les cotes de longueur du chariot pourront varier de 600 mm à 1400 mm et même plus, suivant les nécessités crées par l'emploi.Pour certains emplois, où il serait nécessaire de vider le chariot sans l'emploi d'engins de levage, le contreplaqué constituant le plateau sera posé incliné de sorte que les matériaux à vider se vident par eux-mêmes.Il suffit en fait que le plateau soit aux dimensions intérieures des parois.Des bois posés en travers du chassis entre le plateau et le chassis permettent d'envisager cette construction.On peut également pour vider le contenu du chariot, construire un deuxième chassis s'intègrant dans le premier et pivotant sur un axe situé au bas de la porte.Ce deuxième chassis s'inclinerait grâce à un vérin à vis ou vérin hydraulique à commande manuelle ou par un treuil.Plus simplement, le chariot décrit dans les dessins peut être équipé sur la face avant, voir figure 6, d'un vérin soit à vis, soit hydraulique à commande manuelle.En bloquant les roues et en actionnant le vérin, le chariot se lève de l'avant vidant ainsi les matériaux contenus dans sa caisse.

Pour étendre l'utilisation du chariot conforme à l'invention, les roues pourront être de qualité différente, voire même à bandage pneumatique Le contreplaqué pourra être suivant les usages, remplacé par une tôle ou un autre matériau.

L'objectif de ce chariot à vidage automatique est de se substituer à la brouette dans tous les travaux où celle-ci est employée quotidiennement.Le levier du deuxième genre qui est le principe de la brouette n'autorise le transport que de faibles fardeaux, et exige des efforts pénibles de son utilisateur.Le principe du chariot conforme à l'invention permet d'éviter ces inconvénients.

REVENDICATIONS

1 - Chariot suspendu s'ouvrant automatiquement au contact d'un repère fixe de déchargement, doté d'une porte latérale pivotant autour d'un
axe horizontal situé en partie haute, dont le vérouillage est assuré
par une chaîne de pièces nécaniques, caractérisé en ce que ladite chaîne comprend un élément sensible dont le déplacement commandé par le repère de chargement entraîne de déverouillage de la porte.

2- Chariot suspendu selon la revendication 1 dont la porte est vérouillée
par l'engagement de têtières, portées par une tige glissant le long du
chariot, dans des gâches solidaires de la porte, caractérisé en ce que
l'élément sensible de la chaîne est constitué par une portion de câble
démunie de gaine, susceptible au contact du repère fixe, de relever la
tige glissant le long du chariot et de désengager les têtières.

3 - Chariot suspendu selon la revendication 1 dont la porte est vérouillée
par l'engagement d'un fer 30, solidaire de la porte, dans des niches
solidarisées du caisson, caractérisé en ce que l'élément sensible de
la chaîne est une tige 33, solidaire du fer 3 , susceptible d'un mouvement vertical au contact du repère fixe entraînant ainsi le dégagement du fer 30.

4 - Chariot suspendu selon la revendication 1 dont la porte est vérouillée
. par l'appui d'un bras pivotant 38, maintenu en position de fermeture
par un galet 34, caractérisé en ce que l'élément sensible de la chaîne de vérouillage est un câble 26, susceptible, au contact du repère
de chargement, de soulever le galet de blocage 34 libérant le bras pivotant 38.

5 - Chariot suspendu selon la revendication 4 caractérisé en ce que le vérouillage de la porte est assuré par le crochet 39 maintenu en position
de fermeture par le galet 34.

FIG.1

FIG.2

FIG.3

FIG.4

{ 4

{ 5

FIG.5

FIG.6

4

4

5

5

1

1

{ 6

FIG.7

6

FIG.8

FIG.9                    FIG.10

FIG.11

FIG. 12

FIG. 13

FIG. 14

FIG. 15

23
12
21
20
22

28    27         26   15    14
29

FIG. 16

12
17
22
8
4
21  24  25   23   20

FIG. 17

FIG. 18

FIG. 19

FIG. 20

FIG. 21

FIG . 22

FIG . 23

FIG . 24

F I G . 2 5

F I G . 2 6

0053058

**Office européen des brevets**

## RAPPORT DE RECHERCHE EUROPEENNE

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | B 62 B 3/04 |
| A | <u>US - A - 3 542 220</u> (PROPST) <br> * En entier * | 1 | |
| A | <u>DE - B - 1 245 856</u> (MASCHINEN-UND APPARATEBAU GmbH DORNAP) <br> * En entier * | 1 | |
| A | <u>FR - A - 2 412 477</u> (U.T.P.M.) <br> * En entier * <br><br> ---- | 1 | |

**DOMAINES TECHNIQUES RECHERCHES (Int. Cl. 3)**

B 62 B
B 65 D
B 65 F

**CATEGORIE DES DOCUMENTS CITES**

X: particulièrement pertinent à lui seul
Y: particulièrement pertinent en combinaison avec un autre document de la même catégorie
A: arrière-plan technologique·
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 26-02-1982 | VANNESTE |

OEB Form 1503.1 06.78